# EUROPÄISCHE PATENTSCHRIFT

(11) **EP 0 625 264 B1**
(45) Veröffentlichungstag und Bekanntmachung des Hinweises auf die Patenterteilung: **01.04.1998**
(21) Anmeldenummer: 94900735.5
(22) Anmeldetag: 27.11.1993
(51) Int. Cl.: G01N 27/14

(54) **HEIZANORDNUNG**
HEATER ARRANGEMENT
DISPOSITIF DE CHAUFFAGE

(30) Priorität: 04.12.1992 DE 4240812
(43) Veröffentlichungstag der Anmeldung: 23.11.1994
(73) Patentinhaber: ROBERT BOSCH GMBH, 70442 Stuttgart (DE)
(72) Erfinder: HIPP, Heinrich, D-71282 Hemmingen (DE)
(86) Internationale Anmeldenummer: DE9301135
(87) Internationale Veröffentlichungsnummer: WO9414057

(56) Entgegenhaltungen:
- WO-A-91/09301
- DE-A- 4 006 085
- US-A- 4 164 539

## Beschreibung

### Stand der Technik

Die Erfindung geht aus von einer Heizeranordnung für einen Meßfühler zur Bestimmung von Bestandteilen in Gasen, insbesondere in Abgasen von Verbrennungsmotoren nach der Gattung des Hauptanspruchs. Aus der DE-OS 29 13 866 ist bekannt, bei einem planaren Meßfühler in zwei Ebenen übereinander zwei Heizelemente anzuordnen, die zum Meßelement hin und untereinander jeweils mit einer Isolierschicht elektrisch isoliert sind. Jedes der beiden Heizelemente verfügt über eine Heizleiterbahn und über zwei Heizanschlußbahnen, die zur meßgasabgewandten Seite des Meßfühlers gelegt sind, so daß sie dort jeweils an eine Stromquelle anschließbar sind.

Aus der WO-A-91/09301 ist ein Widerstandsmeßfühler mit einer Heizeranordnung bekannt, bei dem der Heizer mit Heizerzuleitungen auf einer Großfläche eines isolierenden Substrat angeordnet ist. Am Ende der jeweiligen Heizerzuleitung ist durch das Substrat jeweils eine Durchkontaktierung gelegt, die auf die gegenüberliegende Großfläche führt. Dort sind die Durchkontaktierungen mit auf dieser Großfläche des Substrats aufgebrachten Heizerkontakten verbunden.

### Vorteile der Erfindung

Die Heizeranordnung mit den kennzeichnenden Merkmalen des Hauptanspruchs hat demgegenüber den Vorteil, daß sich die Heizleistung erhöht, so daß der Meßfühler eine kürzere Regelbereitschaft besitzt. Insbesondere beim Einsatz als Stabheizer in Lambdasonden wird zusätzlich eine Verbesserung der Empfindlichkeit gegenüber Verunreinigungen erzielt.

Durch die in den Unteransprüchen aufgeführten Maßnahmen sind vorteilhafte Weiterbildungen und Verbesserungen der im Hauptanspruch angegebenen Heizeranordnung möglich. Eine besonders hohe Heizleistung ist erzielbar, wenn die Heizleiterbahnen der einzelnen Heizelemente zumindest teilweise mäanderförmig ausgeführt sind. Eine besonders homogene Temperaturverteilung wird erreicht, wenn bei einer innen und außen geführten Heizleiterbahn der innere Heizleiterbahnabschnitt breiter als der äußere Heizleiterbahnabschnitt ausgeführt ist. Zur Vermeidung von thermischen Überbeanspruchungen ist es zweckmäßig, wenn die Abstände zweier Heizleiterbahnen nebeneinander in einer Ebene möglichst groß sind und die Heizleiterbahnen einen Mindestabstand zum Rand des Keramikträgers besitzen.

### Zeichung

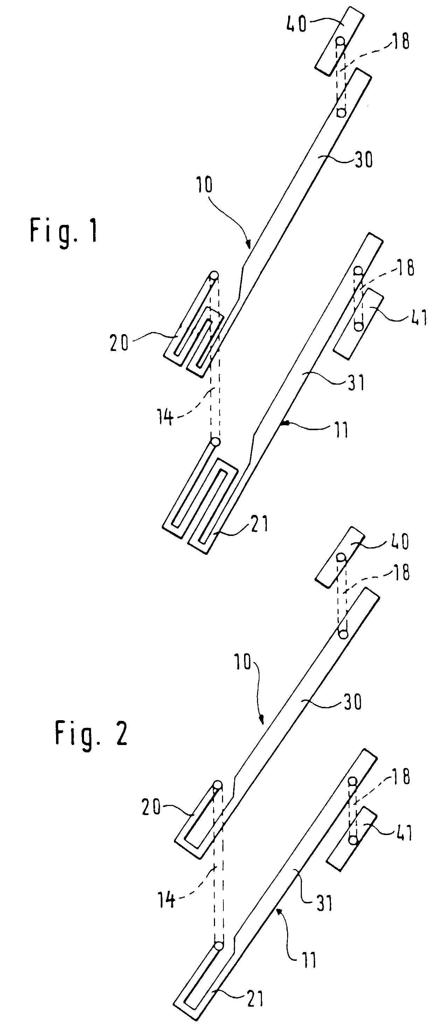

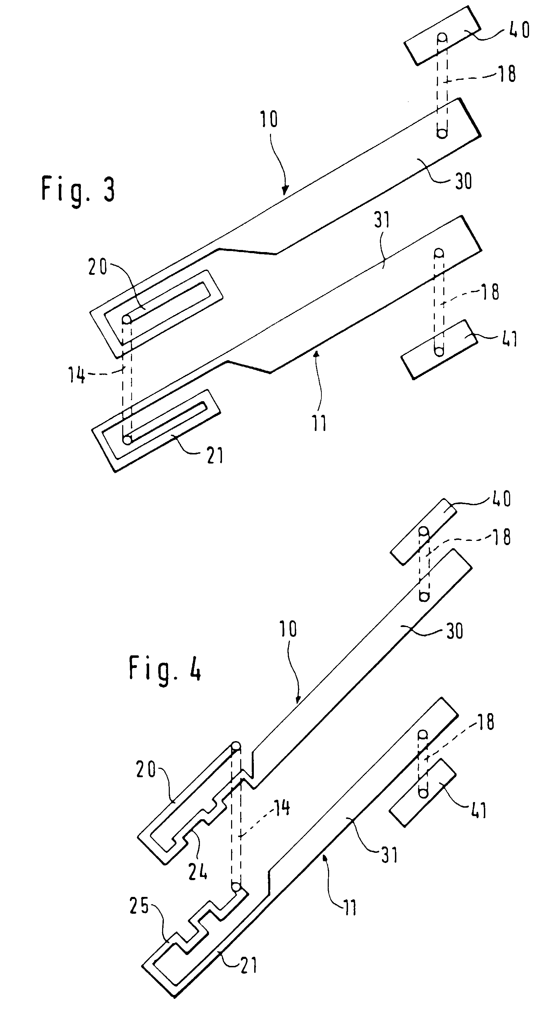

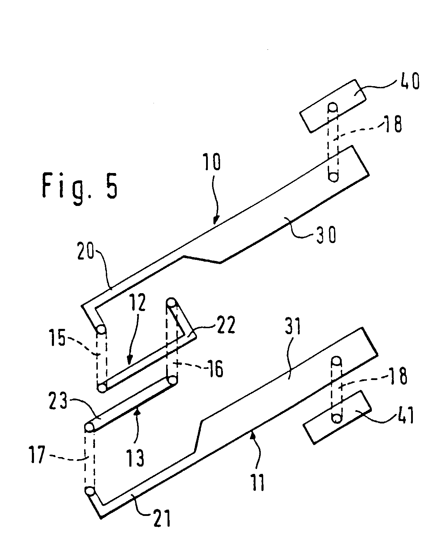

Mehrere Ausführungsbeispiele der Erfindung sind in der Zeichnung dargestellt und in der nachfolgenden beschreibung näher erläutert. Es zeigen Figur 1 eine Explosivdarstellung zweier Heizelemente mit jeweils einer einen inneren und äußeren Abschnitt aufweisenden Heizleiterbahn, Figur 2 eine Explosivdarstellung zweier Heizelemente mit jeweils einer am Rand eines Keramikträgers verlaufender Heizleiterbahn, Figur 3 eine Explosivdarstellung zweier Heizelemente mit jeweils einer von außen nach innen verlaufenden Heizleiterbahn, Figur 4 eine spezielle Ausfünrungsform der Heizeranordnung gemäß Figur 2, bei der jeweils eine außenliegende Heizleiterbahn einen mäanderförmigen Verlauf besitzt, und Figur 5 eine Explosivdarstellung von vier Heizelementen.

### Ausführungsbeispiele

Die in der Zeichnung dargestellten Ausführungsbeispiele zeigen jeweils Heizelemente mit dem Verlauf einer Heizleiterbahnen, Heizeranschlußbahnen und Heizeranschlüssen; jedoch nicht die zwischen den Heizelementen angeordneten keramischen Isolierschichten. Anhand der Explosivdarstellungen läßt sich aber leicht vorstellen, daß zwischen den Heizelementen einerseits sowie den Heizelementen und Heizeranschlüssen andererseits jeweils eine keramische Isolierschicht angeordnet ist.

Das Ausführungsbeispiel gemäß Figur 1 zeigt ein erstes Heizelement 10 und ein zweites Heizelement 11. Zwischen den beiden Heizelementen 10 und 11 ist eine nicht dargestellte Isolierschicht angeordnet. Die Isolierschicht besteht beispielsweise aus einem oder mehreren Keramikplättchen aus Al₂O₃, auf dessen beiden Großflächen die Heizelemente 10 und 11 beispielsweise mittels einer Wolfram-Druckpaste aufgedruckt sind.

Beide Heizelemente 10 und 11 besitzen jeweils eine Heizleiterbahn 20, 21 und jeweils eine Heizeranschlußbahn 30, 31. Die Heizleiterbahnen 20, 21 verlaufen auf den beiden Großflächen des Keramikträgers derart, daß am Rand des Keramikplättchens jeweils zwei parallel verlaufende Heizleiterbahnabschnitte sind, zwischen denen ein nach innen geführter, mäanderförmiger Heizleiterbahnabschnitt liegt.

Die beiden Heizelemente 10 und 11 liegen vorzugsweise deckungsgleich aufeinander, so daß das Ende der Heizleiterbahn 20 des ersten Heizelements 10 über dem Ende der Heizleiterbahn 21 des zweiten Heizelements 11 zu liegen kommt. An dieser Stelle ist in der Isolierschicht ein Loch vorhanden, durch das eine Kontaktierung 14, ein sogenanntes Vias gelegt ist. Damit ist eine elektrische Verbindung zwischen dem ersten Heizelement 10 und dem zweiten Heizelement 11 hergestellt. Die Kontaktierung 14 kann beispielsweise durch Eintropfen einer Wolframpaste in das in der Isolierschicht eingebrachte Loch herstellt werden.

Auf dem ersten Heizelement 10 und dem zweiten Heizelement 11 ist im vorliegenden Ausführungsbeispiel jeweils eine nicht dargestellte weitere keramische Isolierschicht, beispielsweise aus Al₂O₃ aufgebracht. Auf der das erste Heizelement 10 bedeckenden Isolierschicht befindet sich ein erster Heizeranschluß 40 und auf der das zweite Heizelement 11 bedeckenden Isolierschicht ein zweiter Heizeranschluß 41. In den beiden Isolierschichten ist jeweils ein weiteres Loch eingebracht, in dem jeweils eine weitere Kontaktierung 18 zur elektrischen Verbindung der Heizeranordnung 40, 41 mit den Heizeranschlußbahnen 30, 31 eingebracht ist. Beide Heizeranschlüsse 40, 41 sind ebenfalls mittels einer Wolframpaste auf die beiden Isolierschichten aufgedruckt. Die beiden Heizeranschlüsse 40, 41 liegen somit frei und können zur Kontaktierung mit elektrischen Anschlüssen verwendet werden.

Im wesentlichen den gleichen Aufbau wie das Ausführungsbeispiel in Figur 1 besitzt die Ausführungsform gemäß Figur 2, jedoch sind die Heizleiterbahnen 20 und 21 der beiden Heizelemente 10 und 11 anders geführt. Bei dieser Ausführungsform besitzen die Heizleiterbahnen 20 und 21 jeweils einen größeren Abstand als beim Ausführungsbeispiel in Figur 1. Die Heizleiterbahnen 20 und 21 sind jeweils am Rande der Isolierschicht entlang geführt.

Eine weitere Ausführungsform der Heizleiterbahnen zeigt Figur 3, bei dem die erste und die zweite Heizleiterbahn 20, 21 jeweils am Rand der Isolierschicht entlang und jeweils mit einem Heizleiterbahnabschnitt zurück in Richtung der Vorderkante der Isolierschicht geführt ist, so daß die beiden Enden der Heizleiterbahnen 20 und 21 in der Mitte im vorderen Bereich der Isolierschicht übereinander zu liegen kommen. Bei diesem Ausführungsbeispiel liegt der Abstand der Heizleiterbahn 20, 21 jeweils zwischen dem der Ausführungsbeispiele von Figur 1 und 2.

Eine weitere Ausführungsform der Heizleiterbahnen gemäß dem in Figur 2 dargestellten Ausführungsbeispiel geht aus Figur 4 hervor. Hierbei verlaufen die Heizleiterbahnen 20 und 21 ebenfalls am Rand der Isolierschicht, wobei jeweils einer der Längsabschnitte der Heizleiterbahnen einen mäanderförmigen Verlauf 24, 25 besitzt. Der mit dem mäanderförmigen Verlauf 24, 25 jeweils ausgeführte Längsabschnitt ist dabei so ausgeführt, daß der mäanderförmige Verlauf 24 des ersten Heizelements 10 dem geraden Abschnitt der Heizleiterbahn 21 des zweiten Heizelements 11 und der mäanderförmige Abschnitt 25 des zweiten Heizelements 11 dem geraden Abschnitt der Heizleiterbahn 20 des ersten Heizelements 10 gegenüberliegen. Durch diese Ausführungsform entsteht zu den Schmalseiten der Heizeranordnung hin ein stärkeres Temperaturfeld als bei den vorher beschriebenen Ausführungsformen. Bei den in den Figuren 1 bis 4 dargestellten Ausführungsformen liegen die Enden der ersten Heizleiterbahn 20 und der zweiten Heizleiterbahn 21 jeweils deckungsgleich übereinander, so daß die Kontaktierung 14, wie bereits beim ersten Ausführungsbeispiel gemäß Figur 1 beschrieben, erfolgt.

Schließlich geht aus Figur 5 ein Ausführungsbeispiel hervor, bei dem vier Heizelemente 10, 11, 12 und 13 vorgesehen sind. Jedes der Heizelemente 10, 11, 12 und 13 liegt jeweils in einer Ebene und ist vom benachbarten Heizelement jeweils durch eine nicht dargestellte Isolierschicht getrennt. Das erste und das zweite Heizelement 10, 11 besitzt, wie bereits bei den vorhergehenden Ausführungsbeispielen beschrieben, jeweils eine Heizleiterbahn 20, 21 und eine Heizeranschlußbahn 30, 31. Die Heizleiterbahnen 20, 21 verlaufen symmetrisch in Bezug auf eine senkrecht zur Schichtebene verlaufende Symmetrieebene. Die Heizleiterbahnen 20, 21 besitzen jeweils einen entlang der Längsseite der Isolierschicht verlaufenden Abschnitt und einen dazu rechtwinklig entlang der Schmalseite der Isolierschicht verlaufenden Abschnitt. Das unter dem ersten Heizelement 10 angeordnete dritte Heizelement 12 verläuft von der Projektion des Endes der ersten Heizleiterbahn 20 ausgehend entlang der Längsseite der Isolierschicht und knickt rechtwinklig in Richtung der gegenüberliegenden Längsseite ab bis unterhalb der ersten Heizleiterbahn 20. Die vierte Heizleiterbahn 23 verläuft entlang der Längsseite der Isolierschicht und beginnt an der Stelle der Projektion des zweiten Endes der dritten Heizleiterbahn 22 und endet an der Stelle der Projektion des Endes der zweiten Heizleiterbahn 21. Somit liegen die Enden der Heizleiterbahnen 20, 21, 22, 23 derart übereinander, daß eine elektrische Verbindung mittels durch die Isolierschichten reichenden ersten, zweiten und dritten Kontaktierungen 15, 16, 17 möglich ist. Die Ausführung der Kontaktierung 15, 16, 17 und die Ausführung der Heizeranschlüsse 40, 41 sowie der dazugehörigen Anschlußkontaktierungen 18 erfolgt wie bereits im ersten Ausführungsbeispiel beschrieben.

Es ist außerdem denkbar, neben den Isolierschichten die Heizeranordnung auf weiteren keramischen Trägerschichten aufzubringen. Ebenso können die auf das erste und zweite Heizelement 10, 11 aufgebrachten äußeren Isolierschichten durch andere gut wärmeleitenden keramischen Schichten ersetzt werden. Ferner ist es denkbar, die elektrischen Anschlüsse direkt auf die Heizeranschlußbahnen 30, 31 zu legen.

Die Anwendung der Erfindung beschränkt sich nicht auf die beschriebenen Stabheizer für Lambda-Fingersonden. Es ist genauso denkbar, die Heizeranordnung für planare Sonden auszuführen, wobei eines der außen liegenden Heizelemente elektrisch isoliert mit einem Meßelement verbunden wird. Derartige Meßelemente können beispielsweise potentiometrische oder polarographische Sensorelemente oder Widerstandsmeßfühler sein.

## Patentansprüche

1. Heizeranordnung für einen Meßfühler zur Bestimmung von Bestandteilen in Gasen, insbesondere in Abgasen von Verbrennungsmotoren, mit mindestens zwei zumindest teilweise übereinander angeordneten Heizelementen mit jeweils einer Heizleiterbahn und mit Heizeranschlußbahnen, wobei die Heizelemente mittels mindestens einer Isolierschicht voneinander elektrisch isoliert sind, dadurch gekennzeichnet, daß eine erste und eine zweite Heizeranschlußbahn (30, 31) vorgesehen sind, die durch die Isolierschicht voneinander getrennt in unterschiedlichen Schichtebenen angeordnet sind, daß die erste Heizeranschlußbahn (30) mit einer ersten Heizleiterbahn (20) und die zweite Heizeranschlußbahn (31) mit einer weiteren Heizleiterbahn (21) verbunden sind und daß von der einen Heizleiterbahn (20) zur anderen Heizleiterbahn (21) eine durch die Isolierschicht gelegte Kontaktierung (14, 15, 16, 17) vorgesehen ist, derart, daß die Heizleiterbahnen (20, 21) in Reihe hintereinander geschaltet sind.

2. Heizeranordnung nach Anspruch 1, dadurch gekennzeichnet, daß mehr als zwei Heizelemente (10, 11, 12, 13) vorgesehen sind, von denen die beiden außenliegenden Heizelemente (10, 11) über jeweils eine Heizleiterbahn (20, 21) und eine Heizeranschlußbahn (30, 31) verfügen, daß das oder die innenliegenden Heizelemente (12, 13) eine Heizleiterbahn (22, 23) besitzen, und daß die Enden der einzelnen Heizleiterbahnen (20, 21, 22, 23) jeweils mittels Kontaktierungen (15, 16, 17) verbunden sind.

3. Heizeranordnung nach einem der vorhergehenden Ansprüche, dadurch gekennzeichnet, daß die Heizelemente (10, 11, 12, 13) schichtförmige Widerstandsheizer sind.

4. Heizeranordnung nach Anspruch 3, dadurch gekennzeichnet, daß die Heizleiterbahnen (20, 21, 22, 23) mäander- und/oder zickzack-förmig auf der Großfläche der Isoliersctichten geführt sind.

5. Heizeranordnung nach Anspruch 4, dadurch gekennzeichnet, daß die Heizleiterbahnen (20, 21, 22, 23) bezogen auf die Ebene der Isolierschicht jeweils einen inneren und einen äußeren Heizleiterbahnabschnitt aufweisen, wobei der innere Heizleiterbahnabschnitt breiter als der entsprechend äußere Heizleiterbahnabschnitt ausgeführt ist.

## Claims

1. Heater arrangement for a measuring sensor for determining constituents in gases, in particular in exhaust gases from internal combustion engines, having at least two heating elements which are arranged at least partly one above the other each with a heating conductor track and with heater connecting tracks, the heating elements being electrically insulated from one another by at least one insulating layer, characterized in that a first and a second heater connecting track (30, 31) are provided which are arranged in different layer planes separated from one another by the insulating layer, in that the first heater connecting track (30) is connected to a first heating conductor track (20) and the second heater connecting track (31) is connected to a further heating conductor track (21), and in that a connection (14, 15, 16, 17) routed through the insulating layer is provided from one heating conductor track (20) to the other heating conductor track (21) in such a way that the heating conductor tracks (20, 21) are connected in series one behind the other.

2. Heater arrangement according to Claim 1, characterized in that more than two heating elements (10, 11, 12, 13) are provided, of which the two outer heating elements (10, 11) each have a heating conductor track (20, 21) and a heater connecting track (30, 31), in that the inner heating element(s) (12, 13) has (have) a heating conductor track (22, 23), and in that the ends of the individual heating conductor tracks (20, 21, 22, 23) are each connected by means of connections (15, 16, 17).

3. Heater arrangement according to one of the preceding claims, characterized in that the heating elements (10, 11, 12, 13) are layer-type resistance heaters.

4. Heater arrangement according to Claim 3, characterized in that the heating conductor tracks (20, 21, 22, 23) are routed in meander and/or zigzag fashion over the large face of the insulating layers.

5. Heater arrangement according to Claim 4, characterized in that the heating conductor tracks (20, 21, 22, 23) each have an inner and an outer heating conductor track segment, referred to the plane of the insulating layer, the inner heating conductor track segment being of wider construction than the correspondingly outer heating conductor track segment.

## Revendications

1. Dispositif de chauffage pour un capteur de mesures servant à déterminer des composants dans des gaz, en particulier dans des gaz d'échappement de moteurs à combustion interne, avec au moins deux éléments de chauffage disposés au moins en partie l'un au dessus de l'autre, avec respectivement une piste conductive de chauffage et des pistes de raccordement du corps de chauffage, les éléments de chauffage étant isolés électriquement les uns des autres au moyen d'au moins une couche isolante,
caractérisé en ce que
• on prévoit une première et une seconde piste conductive de chauffage (30, 31), qui sont disposées dans des plans différents de la couche isolante en étant séparées l'une de l'autre par celle-ci,
• la première piste de raccordement de corps de chauffage (30) est reliée à une première piste conductive de chauffage (20) et la seconde piste de raccordement de corps de chauffage (31) est reliée à une autre piste conductive de chauffage (20) et
• on prévoit une mise en contact (14, 15, 16, 17) placée à travers la couche isolante, allant de l'une des pistes conductives de chauffage (20) à l'autre piste conductive de chauffage (21), d'une manière telle que les pistes conductives de chauffage (20, 21) soient montées en série l'une derrière l'autre.

2. Dispositif de chauffage selon la revendication 1,
caractérisé en ce que
• on prévoit plus de deux éléments de chauffage (10, 11, 12, 13), dont les deux éléments de chauffage (10, 11), qui se trouvent à l'extérieur, disposent respectivement d'une piste conductive de chauffage (20, 21) et d'une piste de raccordement de corps de chauffage (30, 31),
• le ou les éléments de chauffage, qui se trouvent à l'intérieur (12, 13), possèdent une piste conductive de chauffage (22, 23) et
• les extrémités des différentes pistes conductives de chauffage (20, 21, 22, 23) sont respectivement reliées au moyen de mises en contact (15, 16, 17).

3. Dispositif de chauffage selon l'une des revendications précédentes,
caractérisé en ce que
les éléments de chauffage (10, 11, 12, 13) sont des thermo-résistances en forme de couches.

4. Dispositif de chauffage selon la revendication 3,
caractérisé en ce que
les pistes conductives de chauffage (20, 21, 22, 23) s'étendent sur la grande surface des couches isolantes en forme de méandres et/ou de zigzag.

5. Dispositif de chauffage selon la revendication 4,
caractérisé en ce que
les pistes conductives de chauffage (20, 21, 22, 23) présentent, par rapport au plan de la couche isolante, respectivement une section intérieure et une section extérieure de piste conductive de chauffage, la section intérieure de piste conductive de chauffage étant réalisée de façon plus large que la section extérieure correspondante de piste conductive de chauffage.
